# EUROPÄISCHE PATENTSCHRIFT

(11) **EP 2 341 116 B1**
(45) Veröffentlichungstag und Bekanntmachung des Hinweises auf die Patenterteilung: **30.11.2016**
(21) Anmeldenummer: 09016157.1
(22) Anmeldetag: 31.12.2009
(51) Int. Cl.: C09J 201/10, C08G 85/00

(54) **Polymere Verbindung umfassend eine Polymerkette und mindestens eine an die Polymerkette gebundene Silylgruppe**
Polymeric compound comprising a polymer chain and at least one silyl group bound to the polymer chain
Connexion en polymère comprenant une chaîne de polymère et au moins un groupe de silylé relié à une chaîne de polymère

(43) Veröffentlichungstag der Anmeldung: 06.07.2011
(73) Patentinhaber: Merz+Benteli AG, 3172 Niederwangen (CH)
(72) Erfinder: Huber, Stefan, 4900 Langenthal (CH); Burkhardt, Fritz, 3414 Oberburg (CH); Lerf, Claude, 3280 Meyriez (CH)
(74) Vertreter: Schaad, Balass, Menzl & Partner AG

(56) Entgegenhaltungen:
- WO-A1-95/31512
- JP-A- 4 202 481
- US-A- 4 826 921

## Beschreibung

Die vorliegende Erfindung betrifft eine feuchtigkeitshärtende Zusammensetzung enthaltend eine polymere Verbindung umfassend eine Polymerkette und mindestens eine an die Polymerkette gebundene Silylgruppe gemäss Anspruch 1 sowie ein Verfahren und eine Zusammensetzung zur Herstellung der feuchtigkeitshärtenden Zusammensetzung gemäss Anspruch 9 bzw. 12. Die Erfindung betrifft ferner ein die besagte Zusammensetzung umfassendes Gebinde gemäss Anspruch 14 sowie die Verwendung besagter Verbindung in einem feuchtigkeitshärtenden Dicht- oder Klebstoff gemäss Anspruch 15.

Verbindungen der eingangs genannten Art sind dem Fachmann als silan-modifizierte Polymere (SMP) schon seit geraumer Zeit bekannt. Besagte Verbindungen stellen in der Regel feuchtigkeitsreaktive Präpolymere dar und kommen insbesondere in feuchtigkeitshärtenden Dicht- oder Klebstoffen zur Anwendung.

Allen silan-modifizierten Polymeren ist gemeinsam, dass sie nebst einer organischen Polymerkette (auch "Backbone" genannt) mindestens eine hydrolisierbare Silylgruppe aufweisen, die über entsprechende Bindegruppen ("coupling groups") an die Polymerkette gebunden ist.

Die Eigenschaften entsprechender Dicht- bzw. Klebstoffe sowohl in ihrer pastösen als auch in ihrer ausgehärteten Form wird massgeblich über die Art der Polymerkette des darin enthaltenen silan-modifizierten Polymers beeinflusst, wie etwa von M. Pröbster, in "Silane-Modified Polyether Sealants and Elastic Adhesives", Adhesives & Sealants 9/2009, Seiten 18 ff. beschrieben wird. Gemäss diesem Artikel stellt sich in konventionellen silan-modifizierten Polymeren oft das Problem, dass diese einer relativ rasch verlaufenden hydrothermalen Alterung ausgesetzt sind. Insbesondere bilden Heteroatome, wie beispielsweise Sauerstoff in einer Polyetherkette, Angriffsstellen für einen radikalisch induzierten Kettenabbau. Gegenüber Polyetherketten sind Polyesterketten zwar weniger anfällig auf einen UV- und wärmeinduzierte Kettenabbau, dafür aber hydrolytisch weniger stabil.

Im Übrigen ist mit den gängigen Verfahren zur Herstellung silan-modifizierter Polymere nur eine relativ beschränkte Anzahl an kommerziellen Produkten zugänglich. Je nach Verfahren ist die Auswahl möglicher Polymerketten und der mit dieser umzusetzenden Silanverbindungen mehr oder weniger stark beschränkt. Eine Zusammenfassung gängiger Verfahren zur Herstellung silan-modifizierter Polymere ist etwa in dem oben zitierten Artikel von M. Pröbster beschrieben. Eine weitere allgemeine Beschreibung von Verfahren zur Einführung einer reaktiven Siliciumgruppe wird etwa in EP-A-2080777 beschrieben.

Nebst den zu statistisch silylierten Polymeren führenden Copolymerisations-, Pfropfcopolymerisations- und Polyadditions-Reaktionen sind etwa gemäss dem Artikel von M. Pröbster polymer-analoge Reaktionen beschrieben worden, die in der Regel die Reaktion einer Isocyanat-Gruppe mit einer gegenüber Isocyanat reaktiven Gruppe umfasst.

So wird etwa in der WO 03/018658 ein Verfahren beschrieben, in welchem ein Silan mit einer OH, SH- oder NHR³-Gruppe mit einem isocyanat-terminierten Präpolymer umgesetzt wird. Alternativ wird gemäss besagter Druckschrift ein eine Isocyanat-Gruppe aufweisendes Silan mit einem gegenüber Isocyanat reaktiven Präpolymer, im Besonderen einem Präpolymer mit OH-, SH- oder NHR³-Gruppen, umgesetzt.

Zudem wird in EP-A-1371670 ein Verfahren beschrieben, in welchem ein Vinylpolymer mit wenigstens einer Hydroxylgruppe mit einer Verbindung umgesetzt wird, die nebst einer Silylgruppe eine Gruppe aufweist, die mit der Hydroxylgruppe reagieren kann. Auch diesbezüglich wird spezifisch eine Isocyanatgruppe erwähnt.

Wie in der WO 86/07072 ausgeführt wird, sind Silanisocyanate allerdings relativ teuer. Im Übrigen sind sie stark toxisch, was relativ strikte Sicherheitsmassnahmen bei der Herstellung der silan-modifizierten Polymere bedingt. Gemäss WO 86/07072 weist auch die Verwendung von Silanalkylchloriden und Hydridosilanen Nachteile auf, da entsprechende Systeme einen Katalysator benötigen.

Weiter wird in WO2008/043583 die Synthese von Polymeren mit Silylendgruppen mittels "atom transfer radical polymerization" beschrieben. Im Besonderen wird dabei die Herstellung silyltelecheler Polymethacrylate, Polyacrylate oder Polystyrole beschrieben.

Zudem wird in WO2008/031895 ein Verfahren beschrieben, in welchem über eine Michael-Polyaddition erhältliche lineare Polymere silaniert werden.

Allerdings weisen insbesondere auch die in WO 2008/04583, WO98/29462 und WO2008/031895 genannten Verfahren den Nachteil auf, dass die Variabilität der dadurch in grossem Massstab erhältlichen, kommerziellen silan-modifizierten Polymere beschränkt ist.

Ausgehend davon besteht die Aufgabe der vorliegenden Erfindung darin, eine feuchtigkeitshärtende Zusammensetzung zur Verfügung zu stellen, welche eine silan-modifizierte Verbindung enthält, die über ein sehr einfaches Verfahren hergestellt werden kann und deren Eigenschaften aus einer grossen Variabilität möglicher Eigenschaften gezielt eingestellt werden können. Insbesondere soll eine feuchtigkeitshärtende Zusammensetzung erhalten werden können, welche eine silan-modifizierte Verbindung mit einer hohen chemischen bzw. thermischen und photolytischen Stabilität enthält.

Die Aufgabe wird erfindungsgemäss gelöst durch die Zusammensetzung gemäss Anspruch 1. Bevorzugte Ausführungsformen sind in den abhängigen Ansprüchen wiedergegeben.

Gemäss Anspruch 1 betrifft die Erfindung eine feuchtigkeitshärtende Zusammensetzung enthaltend eine polymere Verbindung umfassend eine Polymerkette und mindestens eine an die Polymerkette gebundene, hydrolysierbare Silylgruppe, d.h. eine silan-modifizierte Verbindung. Erfindungsgemäss sind die Polymerkette und die Silylgruppe durch eine β-Hydroxyamin-Gruppe miteinander verbunden.

Die Verbindung weist erfindungsgemäss die Formel (I) auf: 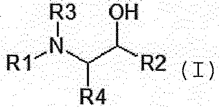 in der
R1 und R2 die Polymerkette oder Silylgruppe einschliesslich eines wahlweise vorhandenden Linkers ist, wobei R1 ≠ R2 ist, und
R3 Wasserstoff oder ein linearer, verzweigter oder cyclischer Kohlenwasserstoffrest ist, welcher wahlweise substituiert sein und/oder ein Heteroatom umfassen und gegebenenfalls mit R1 einen Ring bilden kann, und
R4 Wasserstoff oder ein linearer, verzweigter oder cyclischer Kohlenwasserstoffrest ist, welcher wahlweise substituiert sein und/oder ein Heteroatom umfassen kann.

Die Erfindung umfasst somit sowohl Verbindungen, in denen R1 die Polymerkette und R2 die Silylgruppe ist, als auch Verbindungen, in denen R1 die Silylgruppe und R2 die Polymerkette ist.

Im Zusammenhang mit der vorliegenden Erfindung sind unter dem Begriff "Polymerkette" (auch "Polymer-Backbone" oder "Polymergerüst") sowohl unverzweigte als auch verzweigte Polymerketten umfasst. Unter dem Begriff "Silylgruppe" sind im Zusammenhang mit der vorliegenden Erfindung jedwelche (Organo-)Silylgruppen, insbesondere auch substituierte Silylgruppen und Silyloxygruppen zu verstehen, wie weiter unten ausgeführt wird.

Als Linker kommen insbesondere eine Ether-, Ester-, sekundäre Amino- oder tertiäre Aminogruppe in Frage. Denkbar ist aber auch die Verwendung einer verzweigten oder cyclischen aliphatischen Gruppe oder einer Alkengruppe sowie einer Thioether- oder Thioestergruppe oder eines Aromaten.

R3 kann mit R1 insbesondere dann einen Ring bilden, wenn R1 die Polymerkette ist. Im Allgemeinen wird dabei ein 5- oder 6-gliedriger Ring gebildet und im Speziellen ein gegebenenfalls substituierte Piperazin-, Piperidin- oder Pyrrolidin-Ring.

R3 kann insbesondere auch als Rest der Formel (II) vorliegen 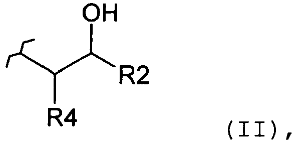 wobei R2 und R4 die oben genannte Bedeutung haben. Dies ist dann der Fall, wenn ein primäres Amin mit zwei epoxyfunktionalisierten Verbindungen reagiert hat. Denkbar ist insbesondere, dass eine eine primäre Aminogruppe aufweisende Polymerkette mit zwei je eine Epoxidgruppe aufweisenden Silanverbindungen umgesetzt wird, wobei eine Verbindung der Formel (I) resultiert, in der R1 die Polymerkette ist, R2 die Silylgruppe ist und R3 der Formel (II) entspricht.

Wird die polymere Verbindung durch Umsetzung einer eine Aminogruppe aufweisenden Polymerkette mit mindestens einer eine Epoxidgruppe aufweisenden Silanverbindung erhalten, so liegt die bevorzugte Anzahl an Silylgruppen pro polymerer Verbindung bei primären Aminogruppen im Allgemeinen zwischen 1 und der doppelten Anzahl an Aminogruppen und bei sekunkdären Aminogruppen zwischen 1 und der einfachen Anzahl an Aminogruppen.

Vorzugsweise liegt die gemittelte Anzahl Silylgruppen pro polymere Verbindung in einem Bereich von 1 bis 10. Bei einer linearen polymeren Verbindung liegt die Anzahl in der Regel bei ca. 2, bei einer verzweigten polymeren Verbindung in der Regel höher.

Nebst der genannten Zusammensetzung betrifft die vorliegende Erfindung zudem ein Verfahren zu deren Herstellung. Dabei werden eine Polymerkette mit einer ersten funktionellen Gruppe und mindestens eine Silanverbindung mit einer gegenüber der ersten funktionellen Gruppe reaktionsfähigen zweiten funktionellen Gruppe miteinander umgesetzt. Erfindungsgemäss ist eine der beiden funktionellen Gruppen eine Epoxidgruppe und die verbleibende der beiden funktionellen Gruppen eine Aminogruppe. Die Erfindung schliesst somit einerseits ein Verfahren mit ein, in dem eine eine Aminogruppe aufweisende Polymerkette mit einer eine Epoxidgruppe aufweisende Silanverbindung umgesetzt wird und andererseits ein Verfahren, in dem eine eine Epoxidgruppe aufweisende Polymerkette mit einer eine Aminogruppe aufweisende Silanverbindung umgesetzt wird. Der Begriff "Aminogruppe", wie er im Kontext der vorliegenden Erfindung verwendet wird, schliesst dabei sowohl primäre als auch sekundäre Aminogruppen mit ein.

Der vorliegenden Erfindung liegt die Erkenntnis zugrunde, dass die Reaktivität zwischen der die Aminogruppe aufweisenden Verbindung und der die Epoxidgruppe aufweisenden Verbindung relativ hoch ist. Unabhängig von der spezifischen Wahl der die Amino- bzw. Epoxidgruppe aufweisenden Verbindung wird somit in der Regel kein Katalysator benötigt. Mithin kann eine grosse Vielfalt möglicher Polymerketten mit einer grossen Vielfalt möglicher Silanverbindungen auf sehr einfache Weise umgesetzt werden, was in einer beträchtlichen Bandbreite möglicher silan-modifizierter Polymere resultiert. Es ist somit erfindungsgemäss möglich, die Eigenschaften silan-modifizierter Polymere in nahezu beliebiger Weise auf den jeweiligen Anwendungszweck hin einzustellen. Im Übrigen wurde gefunden, dass die erfindungsgemässe Verbindung eine hohe Stabilität aufweist.

Die Erfindung stellt somit eine Art modulares "BaukastenSystem" dar, welches es erlaubt, je nach gewünschten Eigenschaften eine bevorzugte Polymerkette mit einer bevorzugten Silanverbindung miteinander zu kombinieren. Eine Einschränkung auf einen Polyether, ein Polyacrylat, ein Polyisobutylen oder ein Polyurethan als Polymerkette, wie sie in den konventionellen Verfahren *de facto* vorliegt, wird somit durch die vorliegende Erfindung überwunden.

Im Besonderen können bei Verwendung der Verbindung in einer Dicht- oder Klebstoffzusammensetzung durch die Wahl der Polymerkette einerseits die Eigenschaften der pastösen Zusammensetzung, wie z.B. das toxische Profil, die Viskosität, Rheologie, Verarbeitbarkeit, Standfestigkeit usw., beeinflusst werden. Andererseits können durch die Wahl der Polymerkette die Eigenschaften der ausgehärteten Masse beeinflusst werden. So können insbesondere hinsichtlich der Beständigkeit, also z.B. der Hitzebeständigkeit, der Brandbeständigkeit, der Tieftemperaturflexibilität, der Tieftemperaturverarbeitbarkeit, der UV-Stabilität, der Wetterstabilität, der Chemikalienbeständigkeit, der Fäkalienbeständigkeit, der Öl- und Kraftstoffbeständigkeit, der Wasserbeständigkeit und der Abriebfestigkeit, aber auch hinsichtlich der mechanischen Eigenschaften, also z.B. der Zugfestigkeit, der Härte, der Elastizität und der Klebrigkeit, die gewünschten Eigenschaften eingestellt werden. Ähnliches gilt hinsichtlich der Durchlässigkeit, d.h. der Wasser-, Dampf- und Gasdurchlässigkeit, und hinsichtlich des toxischen Profils, also z.B. der Lebensmittelverträglichkeit, der Trinkwasserverträglichkeit und der biologischen Abbaubarkeit, der ausgehärteten Dicht- oder Klebstoffzusammensetzung, die nach Bedarf eingestellt werden können.

Insbesondere bei der Verwendung der erfindungsgemässen Verbindung in einer Klebestoffzusammensetzung können die Haftungseigenschaften, also z.B. die Kunststoffhaftung, die Nasshaftung, die Haftung auf porösen und alkalischen oder sauren Oberflächen und die Haftung auf nassen Untergründen, durch entsprechende Wahl der Polymerkette in geeigneter Weise auf den jeweiligen Anwendungszweck hin eingestellt werden. Zudem bestimmt die Polymerkette massgeblich die physikalischen Eigenschaften der ausgehärteten Masse, wie z.B. den Brechungsindex und die elektrische, thermische und akustische Leitfähigkeit bzw. Isolation.

Über die grosse Auswahl an möglichen leicht zugänglichen amin- oder epoxidmodifizierten Polymerketten kann somit für praktisch jede Anwendung ein Polymer mit den gewünschten Eigenschaften erhalten werden.

Im Hinblick auf eine möglichst hohe chemische und thermische Beständigkeit haben sich insbesondere Verbindungen als bevorzugt erwiesen, in denen die Polymerkette ein wahlweise hydrierter Nitrilkautschuk, insbesondere ein Butadien-Acrylnitril-Copolymer, ist. Je nach Anwendung sind hydrierte Nitrilkautschuke aufgrund ihrer erhöhten Temperaturbeständigkeit besonders bevorzugt.

Im Gegensatz zu den im obigen Artikel von M. Pröbster erwähnten konventionellen silan-modifizierten Polyethern weisen die eine Nitrilkautschuk-Polymerkette aufweisenden Verbindungen eine sehr hohe thermische und chemische Beständigkeit auf.

Nebst einem amin-terminierten Butadien-Acrylonitril-Copolymer (wie z.B. Hycar/Hypro von Emerald Materials), welches wahlweise hydriert sein kann, kann etwa auch ein amin-terminierter Polyether (wie z.B. Jeffamine Polyetheramines von Huntsman) zur Umsetzung mit einer eine Epoxidgruppe aufweisenden Silanverbindung verwendet werden.

Weiter sind Verbindungen bevorzugt, in denen die Polymerkette ein Polysulfid ist. Insbesondere bevorzugt sind dabei Verbindungen, in denen R2 in der obigen Formel (I) ein Polysulfid ist, da dabei Dicht- und Klebstoffe mit einer guten Nasshaftung erhalten werden können, die zudem eine hohe chemische, thermische und photolytische Stabilität aufweisen.

Unter den eine Epoxidgruppe tragenden Polymerketten ist nebst einem epoxy-terminierten Polysulfid (wie z.B. Thioplast von Akzo Nobel) insbesondere auch etwa ein epoxy-modifiziertes Polyacrylat (wie z.B. Arufon von Toagosei), ein epoxydiertes Polyisopren oder ein epoxymodifizierter Polyester zur Umsetzung mit einer eine Aminogruppe tragenden Silanverbindung denkbar.

Aufgrund ihrer Verfügbarkeit sind insbesondere auch epoxydierte Fettsäureester auf der Basis nachwachsender Rohstoffe, wie z.B. epoxydiertes Sojabohnenöl, bevorzugt.

Die Silylgruppe weist bevorzugt die Formel (III) auf:

(R5)ₐ(R6)₃₋ₐSi- (III)

wobei R5 ein wahlweise substituierter und/oder ein Heteroatom umfassender Kohlenwasserstoffrest,
R6 ein Alkoxy-, Acetoxy-, Oxim- oder Aminrest, und
a 0, 1, 2 oder 3 ist.

Im Allgemeinen ist R5 ein Kohlenwasserstoffrest mit 1 bis 20 Kohlenstoffatomen. Vorzugsweise ist R5 ein Methyl- oder Ethylrest. Als R5 ist aber auch z.B. ein Aromat, ein Ester, ein Thioester oder ein Thioether denkbar.

R6 ist vorzugsweise ein Methoxy- oder Ethoxyrest.

Besonders bevorzugt ist, dass die Silylgruppe eine Dimethoxymethylsilyl-, eine Dimethoxyethylsilyl-, eine Trimethoxysilylgruppe, eine Diethoxymethylsilyl-, eine Diethoxyethylsilyl- und/oder eine Triethoxysilylgruppe ist. Unter diesen ist eine Diethoxyethylsilyl-, eine Diethoxymethylsilyl- und eine Triethoxysilylgruppe besonders bevorzugt, da bei der Aushärtung (oder Vernetzung) der entsprechend funktionalisierten Polymerkette in einem Kleb- oder Dichtstoff Ethanol abgespalten wird, was hinsichtlich des toxischen Profils gegenüber einer Abspaltung von z.B. Methanol bevorzugt ist.

Als Silanverbindungen kommen prinzipiell alle hydrolysierbaren Silanverbindungen mit einer Amino- bzw. Epoxidfunktion in Frage. Dabei kann es sich sowohl um extrem reaktive α(alpha)-Silane als auch um weniger reaktive y(gamma)-Silane handeln. Insbesondere kommen sowohl Silanverbindungen in Frage, die eine primäre Aminogruppe aufweisen, als auch solche, die eine sekundäre Aminogruppe aufweisen.

Wird eine eine primäre oder sekundäre Aminogruppe aufweisende Polymerkette mit einer eine Epoxidgruppe aufweisenden Silanverbindung umgesetzt, so weist letztere bevorzugt die Strukturformel (IV) auf: 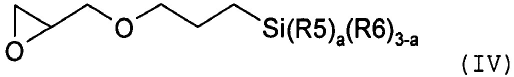 wobei R5 und R6 die oben angegebene Bedeutung hat.

Denkbar ist somit insbesondere (3-Glycidyloxypropyl)dimethoxymethylsilan, (3-Glycidyloxypropyl)trimethoxysilan, (3-Glycidyloxypropyl)diethoxymethylsilan oder (3-Glycidyloxypropyl)triethoxysilan.

Weitere eine Epoxidgruppe aufweisende Silanverbindungen, die für die Zwecke der vorliegenden Erfindung denkbar sind, werden in WO2008/031895 (Seite 7, Nr. 41 bis 47) aufgeführt, deren Inhalt hiermit durch Bezugnahme miteingeschlossen wird. Weiter sei diesbezüglich [2-(3,4-Epoxycyclohexyl)ethyl]trimethoxysilan erwähnt.

Wird eine eine Epoxidgruppe aufweisende Polymerkette mit einer eine Epoxidgruppe aufweisenden Silanverbindung umgesetzt, so weist letztere bevorzugt die Strukturformel (V) auf: 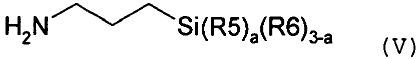 wobei R5 und R6 die oben angegebene Bedeutung hat.

Denkbar ist somit insbesondere Aminopropyltriethoxysilan, Aminopropyldiethoxymethylsilan, Aminopropyltrimethoxysilan oder Aminopropyldimethoxymethylsilan.

Weitere eine Aminogruppe aufweisende Silanverbindungen, die für die Zwecke der vorliegenden Erfindung denkbar sind, werden in WO2008/031895 (Seite 6, Nr. 27 bis 40) aufgeführt, deren Inhalt hiermit durch Bezugnahme miteingeschlossen wird. Weiter sei diesbezüglich [3-(2-Aminoethylamino)propyl]trimethoxysilan erwähnt.

Gemäss einer weiteren bevorzugten Ausführungsform ist die Silylgruppe endständig an die Polymerkette gebunden. Denkbar ist aber auch eine Verbindung, in der die mindestens eine Silylgruppe statistisch verteilt an die Polymerkette gebunden ist.

Wie oben angegeben, betrifft die vorliegende Erfindung nebst der beschriebenen Zusammensetzung im Übrigen ein Verfahren zu deren Herstellung. In diesem Zusammenhang wurde festgestellt, dass die Umsetzung der funktionalisierten Polymerkette mit der entsprechend funktionalisierten Silanverbindung bei Raumtemperatur ohne Katalysator über mehrere Stunden abläuft. Bei Verwendung besonders reaktiver Edukte ist diesbezüglich denkbar, dass diese bereits nach 1 Tag vollständig abreagiert haben. In der Regel läuft die Umsetzung aber über mehrere Tage oder gar Wochen ab.

Die Erfindung betrifft im Übrigen eine Zusammensetzung zur Herstellung der beschriebenen feuchtigkeitshärtenden Zusammensetzung umfassend eine Polymerkette mit einer ersten funktionellen Gruppe und eine Silanverbindung mit einer gegenüber der ersten funktionellen Gruppe reaktionsfähigen zweiten funktionellen Gruppe, wobei eine der beiden funktionellen Gruppen eine Epoxidgruppe und die verbleibende der beiden funktionellen Gruppen eine Aminogruppe ist. Besagte Zusammensetzung eignet sich insbesondere für Klebstoffe, Dichtstoffe, Beschichtungen und Elastomere.

Die Vorteile der erfindungsgemässen Zusammensetzung treten insbesondere bei ihrer Verwendung als Dicht- oder Klebstoff zutage. Denkbar ist diesbezüglich, dass die die Edukte, d.h. die Polymerkette und die Silanverbindung, enthaltende Zusammensetzung in ein Gebinde abgefüllt wird, in der die Edukte bei Raumtemperatur über mehrere Tage zur (silan-modifizierten) polymeren Verbindung der vorliegenden Erfindung umgesetzt werden. Eine unerwünschte Aushärtung vor dem Abfüllen wird somit unterbunden. Zudem kann für die Umsetzung der Silanverbindung mit der Polymerkette auf die Verwendung eines Katalysators verzichtet werden; gemäss einer bevorzugten Ausführungsform ist die Zusammensetzung somit frei von einem Katalysator für die Umsetzung der Silanverbindung mit der Polymerkette.

Wird die Zusammensetzung als Kleb- oder Dichtstoff verwendet, so umfasst sie in der Regel einen Haftvermittler. Dieser liegt insbesondere dann, wenn eine aminofunktionalisierte Polymerkette zur Umsetzung mit einer epoxyfunktionalisierten Silanverbindung vorliegt, vorzugsweise als geschütztes Aminosilan, insbesondere als Ketiminsilan, vor. Durch den Ersatz der konventionellerweise als Haftvermittler eingesetzten Aminosilanen durch ein Silan mit einer blockierten oder geschützten Aminfunktion, welche durch Hydrolyse freigesetzt wird, also z.B. ein Ketiminsilan, wird somit eine gezielte Reaktion zwischen der Polymerkette und der hydrolysierbaren Organosilanverbindung gewährleistet. Aufgrund der Variabilität der möglichen einzustellenden Eigenschaften eignet sich die vorliegende Erfindung insbesondere in Anwendungsgebieten, in denen eine solche "Massschneiderung" von Eigenschaften erwünscht ist. Nebst der Bauindustrie, in der etwa die Wasserbeständigkeit und die Gasdurchlässigkeit für Flächenabdichtungen, die mechanischen Eigenschaften und Hafteigenschaften struktureller Verklebungen sowie etwa die Brandschutzeigenschaften der entsprechenden Zusammensetzung usw. eingestellt werden können, wird die vorliegende Erfindung aufgrund der erhältlichen chemischen Beständigkeit, insbesondere der Öl- und Kraftstoffbeständigkeit, vor allem auch bevorzugt in der Automobilindustrie verwendet. Denkbar ist im Übrigen auch etwa die Verwendung im Schiffsbau aufgrund der erhältlichen Wetterbeständigkeit, oder in elektronischen Anwendungen, aufgrund der erhältlichen Isolationseigenschaften. Für letztgenannte Anwendungen ist es erfindungsgemäss zudem möglich, ein silikonfreies System zu wählen, womit die bei konventionellen Silikonmassen beobachteten Nachteile hinsichtlich des Ausschwitzens umgangen werden können.

Zudem können als Polymerketten amin-modifizierte oder epoxydierte Naturrohstoffe oder nachwachsende Rohstoffe verwendet werden, was den Zugang zu Kleb- und Dichtstoffen mit einem sehr hohen Anteil an nachwachsenden Rohstoffen eröffnet.

Die Erfindung wird anhand der Beispiele weiter ausgeführt:

### BEISPIELE

### A. Synthese einer polymeren Verbindung gemäss der vorliegenden Erfindung

431.5g Hypro ATBN 1300x45 (sek. Amin-terminiertes Nitril-Butadien-Copolymer erhältlich von Emerald Materials) werden mit 203.4g Diisodecylphthalat (DIDP; Weichmacher), 12.2g Vinyltrimethoxysilan (VTMO; Trocknungssilan zum Binden von Wasser, welches im Grundpolymer vorhanden sein könnte) und 65.1g Glyeo (3-Glycidyloxypropyltriethoxysilan; 1 eq zu den sek. Aminogruppen des Polymers) bei Raumtemperatur unter Vakuum gemischt und luftdicht abgefüllt. Die Mischung wird einige Tage bei Raumtemperatur stehengelassen. Nach 5 Tagen sind mittels FT-IR bei 912 cm-1 keine freien Epoxyidgruppen mehr feststellbar.

### B. Formulierung eines Kleb- und Dichtstoffes gemäss der vorliegenden Erfindung

300g des unter A erhaltenen Polymers werden mit 160g DIDP und 375g gefälltes CaCO3 (PCC, z.B. Hakuenka CCR) unter Vakuum gemischt. Dazu werden weitere 30g DIDP und 2.5g VTMO gegeben und unter Vakuum eingemischt. Als letztes werden 8.8g eines Aminosilans als Haftvermittler (z.B. 2-(Aminoethyl)3-Aminopropyltrimethoxysilan) und 2.7g eines Härtungskatalysators (z. B. Metatin 740) unter Vakuum eingemischt. Dies ergibt eine lagerstabile Masse, welche nach der Durchhärtung 2N/mm2 Zugfestigkeit, 160% Bruchdehnung und einen 100%-Modul von 1.39 N/mm2 aufweist.

## Patentansprüche

1. Feuchtigkeitshärtende Zusammensetzung enthaltend eine polymere Verbindung umfassend eine Polymerkette und mindestens eine an die Polymerkette gebundene, hydrolysierbare Silylgruppe, wobei die Polymerkette und die Silylgruppe durch eine β-Hydroxyamin-Gruppe miteinander verbunden sind, **dadurch gekennzeichnet, dass** die Verbindung die Formel (I) aufweist: 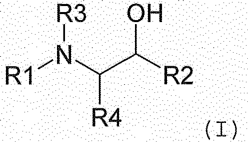 in der
R1 und R2 die Polymerkette oder Silylgruppe einschliesslich eines wahlweise vorhandenden Linkers ist, wobei R1 ≠ R2 ist,
R3 Wasserstoff oder ein linearer, verzweigter oder cyclischer Kohlenwasserstoffrest ist, welcher wahlweise substituiert sein und/oder ein Heteroatom umfassen und gegebenenfalls mit R1 einen Ring bilden kann, und
R4 Wasserstoff oder ein linearer, verzweigter oder cyclischer Kohlenwasserstoffrest ist, welcher wahlweise substituiert sein und/oder ein Heteroatom umfassen kann.

2. Feuchtigkeitshärtende Zusammensetzung nach Anspruch 1, wobei R1 die Polymerkette und R2 die Silylgruppe ist.

3. Feuchtigkeitshärtende Zusammensetzung nach Anspruch 1, **dadurch gekennzeichnet, dass** R1 die Silylgruppe und R2 die Polymerkette ist.

4. Feuchtigkeitshärtende Zusammensetzung nach einem der vorhergehenden Ansprüche, **dadurch gekennzeichnet, dass** die Polymerkette ein wahlweise hydrierter Nitrilkautschuk ist.

5. Feuchtigkeitshärtende Zusammensetzung nach Anspruch 3, **dadurch gekennzeichnet, dass** R2 ein Polysulfid ist.

6. Feuchtigkeitshärtende Zusammensetzung nach einem der vorhergehenden Ansprüche, **dadurch gekennzeichnet, dass** die Silylgruppe die Formel (III) aufweist:
(R5)ₐ(R6)₃₋ₐSi- (III)
wobei R5 ein wahlweise substituierter und/oder ein Heteroatom umfassender Kohlenwasserstoffrest,
R6 ein Alkoxy-, Acetoxy-, Oxim- oder Aminrest, und
a 0, 1, 2 oder 3 ist.

7. Feuchtigkeitshärtende Zusammensetzung nach Anspruch 6, **dadurch gekennzeichnet, dass** die Silylgruppe eine Diethoxymethylsilyl-, eine Diethoxyethylsilyl- und/oder eine Triethoxysilylgruppe ist.

8. Feuchtigkeitshärtende Zusammensetzung nach einem der vorhergehenden Ansprüche, **dadurch gekennzeichnet, dass** die Silylgruppe endständig an die Polymerkette gebunden ist.

9. Verfahren zur Herstellung der feuchtigkeitshärtenden Zusammensetzung gemäss einem der Ansprüche 1 bis 8, wobei die polymere Verbindung hergestellt wird, indem eine Polymerkette mit einer ersten funktionellen Gruppe und mindestens eine Silanverbindung mit einer gegenüber der ersten funktionellen Gruppe reaktionsfähigen zweiten funktionellen Gruppe miteinander umgesetzt werden, wobei eine der beiden funktionellen Gruppen eine Epoxidgruppe und die verbleibende der beiden funktionellen Gruppen eine Aminogruppe ist.

10. Verfahren nach Anspruch 9, **dadurch gekennzeichnet, dass** eine eine Aminogruppe aufweisende Polymerkette mit mindestens einer eine Epoxidgruppe aufweisenden Silanverbindung umgesetzt wird.

11. Verfahren nach Anspruch 9, **dadurch gekennzeichnet, dass** eine eine Epoxidgruppe aufweisende Polymerkette mit mindestens einer eine Aminogruppe aufweisenden Silanverbindung umgesetzt wird.

12. Zusammensetzung zur Herstellung der feuchtigkeitshärtenden Zusammensetzung gemäss einem der Ansprüche 1 bis 8, umfassend eine Polymerkette mit einer ersten funktionellen Gruppe und eine Silanverbindung mit einer gegenüber der ersten funktionellen Gruppe reaktionsfähigen zweiten funktionellen Gruppe, wobei eine der beiden funktionellen Gruppen eine Epoxidgruppe und die verbleibende der beiden funktionellen Gruppen eine Aminogruppe ist.

13. Zusammensetzung gemäss Anspruch 12, **dadurch gekennzeichnet, dass** sie ein geschütztes Aminosilan, insbesondere ein Ketiminsilan, als Haftvermittler umfasst.

14. Gebinde umfassend eine Zusammensetzung nach Anspruch 12 oder 13.

15. Verwendung der Verbindung gemäss einem der Ansprüche 1 bis 8 in einem feuchtigkeitshärtenden Dicht- oder Klebstoff.

## Claims

1. Moisture-curing composition comprising a polymeric compound comprising a polymer chain and at least one hydrolysable silyl group bonded to the polymer chain, where the polymer chain and the silyl group are bonded to one another via a β-hydroxylamine group, **characterized in that** the compound has the formula (I): 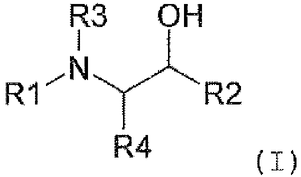 in which
R1 and R2 is the polymer chain or silyl group inclusive of an optionally present linker, where R1 ≠ R2,
R3 is hydrogen or a linear, branched or cyclic hydrocarbon moiety which optionally can have substitution and/or can comprise a heteroatom and optionally can form a ring with R1, and
R4 is hydrogen or a linear, branched or cyclic hydrocarbon moiety which optionally can have substitution and/or can comprise a heteroatom.

2. Moisture-curing composition according to Claim 1, wherein R1 is the polymer chain and R2 is the silyl group.

3. Moisture-curing composition according to Claim 1, **characterized in that** R1 is the silyl group and R2 is the polymer chain.

4. Moisture-curing composition according to any of the preceding claims, **characterized in that** the polymer chain is an optionally hydrogenated nitrile rubber.

5. Moisture-curing composition according to Claim 3, **characterized in that** R2 is a polysulphide.

6. Moisture-curing composition according to any of the preceding claims, **characterized in that** the silyl group has the formula (III):
(R5)ₐ(R6)₃₋ₐSi- (III)
where R5 is an optionally substituted hydrocarbon moiety and/or a heteroatom-comprising hydrocarbon moiety,
R6 is an alkoxy, acetoxy, oxime or amine moiety, and
a is 0, 1, 2 or 3.

7. Moisture-curing composition according to Claim 6, **characterized in that** the silyl group is a diethoxymethylsilyl, a diethoxyethylsilyl and/or a triethoxysilyl group.

8. Moisture-curing composition according to any of the preceding claims, **characterized in that** the silyl group is bonded terminally to the polymer chain.

9. Process for the production of the moisture-curing composition according to any of Claims 1 to 8, wherein the polymeric compound is produced in that a polymer chain having a first functional group is reacted with at least one silane compound having a second functional group reactive towards the first functional group, where one of the two functional groups is an epoxy group and the other of the two functional groups is an amino group.

10. Process according to Claim 9, **characterized in that** a polymer chain having an amino group is reacted with at least one silane compound having an epoxy group.

11. Process according to Claim 9, **characterized in that** a polymer chain having an epoxy group is reacted with at least one silane compound having an amino group.

12. Composition for the production of the moisture-curing composition according to any of Claims 1 to 8, comprising a polymer chain having a first functional group and a silane compound having a second functional group reactive towards the first functional group, where one of the two functional groups is an epoxy group and the other of the two functional groups is an amino group.

13. Composition according to Claim 12, **characterized in that** it comprises a protected aminosilane, in particular a ketiminesilane, as adhesion promoter.

14. Container comprising a composition according to Claim 12 or 13.

15. Use of the compound according to any of Claims 1 to 8 in a moisture-curing sealant or moisture-curing adhesive.

## Revendications

1. Composition durcissant à l'humidité comprenant un composé polymère comprenant une chaîne polymère et au moins un groupe silyle hydrolysable lié à la chaîne polymère, la chaîne polymère et le groupe silyle étant liés l'un à l'autre par un groupe β-hydroxylamine, **caractérisée en ce que** le composé présente la formule (I) : 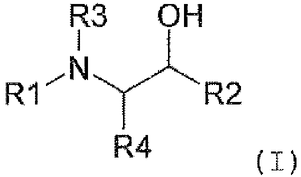 dans laquelle
R1 et R2 est la chaîne polymère ou le groupe silyle y compris un lieur présent optionnellement, dans lequel R1 ≠ R2,
R3 est de l'hydrogène ou un résidu hydrocarboné linéaire, ramifié ou cyclique qui optionnellement peut porter un substituant et/ou comprendre un hétéroatome et optionnellement former un anneau avec R1, et
R4 est de l'hydrogène ou un résidu hydrocarboné linéaire, ramifié ou cyclique qui optionnellement peut porter un substituant et/ou comprendre un hétéroatome.

2. Composition durcissant à l'humidité selon la revendication 1, R1 étant la chaîne polymère et R2 étant le groupe silyle.

3. Composition durcissant à l'humidité selon la revendication 1, **caractérisée en ce que** R1 est le groupe silyle et R2 est la chaîne polymère.

4. Composition durcissant à l'humidité selon l'une quelconque des revendications précédentes, **caractérisée en ce que** la chaîne polymère est un caoutchouc nitrile optionnellement hydrogéné.

5. Composition durcissant à l'humidité selon la revendication 3, **caractérisée en ce que** R2 est un polysulfure.

6. Composition durcissant à l'humidité selon l'une quelconque des revendications précédentes, **caractérisée en ce que** le groupe silyle présente la formule (III) :
(R5)ₐ(R6)₃₋ₐSi- (III)
R5 étant optionnellement un résidu hydrocarboné portant un substituant et/ou un résidu hydrocarboné comprenant un hétéroatome,
R6 étant un résidu alcoxy, acétoxy, oxime ou amine, et
a étant 0, 1, 2 ou 3.

7. Composition durcissant à l'humidité selon la revendication 6, **caractérisée en ce que** le groupe silyle est un groupe diéthoxyméthylsilyle, un groupe diéthoxyéthylsilyle et/ou un groupe triéthoxysilyle.

8. Composition durcissant à l'humidité selon l'une quelconque des revendications précédentes, **caractérisée en ce que** le groupe silyle est lié de façon terminale à la chaîne polymère.

9. Procédé pour la fabrication de la composition durcissant à l'humidité selon l'une quelconque des revendications 1 à 8, le composé polymère étant fabriqué en faisant réagir ensemble une chaîne polymère ayant un premier groupe fonctionnel avec au moins un composé silane ayant un second groupe fonctionnel réactif vis-à-vis du premier groupe fonctionnel, un des deux groupes fonctionnels étant un groupe époxy et l'autre des deux groupes fonctionnels étant un groupe amine.

10. Procédé selon la revendication 9, **caractérisé en ce qu'**une chaîne polymère ayant un groupe amine est mis à réagir avec au moins un composé silane ayant un groupe époxy.

11. Procédé selon la revendication 9, **caractérisé en ce qu'**une chaîne polymère ayant un groupe époxy est mis à réagir avec au moins un composé silane ayant un groupe amine.

12. Composition pour la fabrication de la composition durcissant à l'humidité selon l'une quelconque des revendications 1 à 8, comprenant une chaîne polymère ayant un premier groupe fonctionnel et un composé silane ayant un second groupe fonctionnel réactif vis-à-vis du premier groupe fonctionnel, un des deux groupes fonctionnels étant un groupe époxy et l'autre des deux groupes fonctionnels étant un groupe amine.

13. Composition selon la revendication 12, **caractérisée en ce qu'**elle comprend un aminosilane protégé, en particulier un ketiminesilane, comme promoteur d'adhérence.

14. Conteneur comprenant une composition selon la revendication 12 ou 13.

15. Utilisation du composé selon l'une quelconque des revendications 1 à 8 dans une substance d'étanchéité durcissant à l'humidité ou dans un adhésif durcissant à l'humidité.
